# EUROPEAN PATENT APPLICATION

(11) **EP 4 730 586 A1**
(43) Date of publication of application: **22.04.2026**
(21) Application number: 24207593.5
(22) Date of filing: 18.10.2024
(51) Int. Cl.: H02J 1/08, H02J 3/32, H02J 7/00, H02J 7/34

(54) **A CONTROL UNIT AND A METHOD FOR MANAGING IDLE TIME IN A BATTERY ENERGY STORAGE SYSTEM**

(71) Applicant: Volvo Penta Corporation, 405 08 Göteborg (SE)
(72) Inventor: BHUMIREDDY, Amaranath Reddy, 426 50 Göteborg (SE); KERSTEN, Anton, 433 42 Partille (SE)
(74) Representative: Zacco Sweden AB

(57) **Abstract**

A control unit for managing idle time in a battery energy storage system, wherein the battery energy storage system comprises: a main high voltage battery pack, an auxiliary battery pack, and a bi-directional DC-DC circuit connecting the main high voltage battery pack and the auxiliary battery pack to facilitate energy transfer between the two, and wherein the control unit is configured to: monitor idle time and state of charge (SoC) of the main high voltage battery pack, wherein the idle time reflects a period during which the SoC remains unchanged; and initiate a charge alternation mode in response to the idle time of the main high voltage battery pack exceeding a predetermined duration, wherein the charge alternation mode involves alternating between energy transfer from the main high voltage battery pack to the auxiliary battery pack, and energy transfer from the auxiliary battery pack to the main high voltage battery pack.

## Description

### TECHNICAL FIELD

The disclosure relates generally to management strategies for battery energy storage systems. In particular aspects, the disclosure relates to a control unit and a method for managing idle time in a battery energy storage system. The disclosure can be applied to battery energy storage systems, such as those used in grid storage, among other types of battery-powered applications. Although the disclosure may be described with respect to a particular battery energy storage system, the disclosure is not restricted to any particular battery energy storage system.

### BACKGROUND

Battery energy storage systems (BESS) are employed across a diverse range of applications, including grid support, intermittent renewable power sources, gensets, as well as in energy storage for electric vehicles and marine vessels. An issue with all these systems is the degradation of lithium-ion batteries, often exacerbated by leaving the batteries idle at a high state of charge (SoC), which is detrimental to battery lifetime and overall performance.

Hence, there is a need for improved management strategies that can mitigate the negative effects of idle times, especially for prolonged periods at high SoC. These idle times, often unavoidable due to varying energy demands in applications such as grid storage and transportation, must be addressed to improve efficiency and extend the lifespan of battery energy storage systems.

### SUMMARY

According to a first aspect of the disclosure, a control unit for managing a battery energy storage system is disclosed. The battery energy storage system comprises: a main high voltage battery pack, an auxiliary battery pack, and a bi-directional DC-DC circuit connecting the main high voltage battery pack and the auxiliary battery pack to facilitate energy transfer between the two battery packs. The control unit is configured to monitor an idle time of the main high voltage battery pack, wherein the idle time reflects a period during which the state of charge (SoC) remains unchanged. The control unit is also configured to initiate a charge alternation mode in response to the idle time of the main high voltage battery pack exceeding a predetermined duration, wherein the charge alternation mode involves alternating between energy transfer from the main high voltage battery pack to the auxiliary battery pack, and energy transfer from the auxiliary battery pack to the main high voltage battery pack. The first aspect of the disclosure may seek to enhance battery life by actively managing the charge levels of the main high voltage battery. A technical benefit may include reduced battery degradation by preventing prolonged periods of unchanged SoC.

Optionally in some examples, including in at least one preferred example, the predetermined duration depends on the SoC. A technical benefit may include the ability to adjust the predetermined duration to be shorter for high SoC levels, where degradation is more severe, and to be longer for low SoC levels, where degradation is less severe.

Optionally in some examples, including in at least one preferred example, the bi-directional DC-DC circuit comprises a first bi-directional DC-DC converter connecting the main high voltage battery pack to a DC bus and a second bi-directional DC-DC converter connecting the auxiliary battery pack to the DC bus, thereby facilitating energy transfer between the two battery packs via the DC bus. A technical benefit may include the ability to control energy transfer between the two battery packs when the two battery packs are connected via a DC bus.

Optionally in some examples, including in at least one preferred example, the bi-directional DC-DC circuit comprises a first bi-directional inverter connecting the main high voltage battery pack to an AC bus and a second bi-directional inverter connecting the auxiliary battery pack to the AC bus, thereby facilitating energy transfer between the two battery packs via the AC bus. A technical benefit may include the ability to control energy transfer between the two battery packs when the two battery packs are connected via an AC bus.

Optionally in some examples, including in at least one preferred example, the bi-directional DC-DC circuit comprises: a first bi-directional DC-DC converter connecting the main high voltage battery pack to a first DC bus, a first bi-directional inverter connecting the first DC bus to an AC bus, and a second bi-directional DC-DC converter connecting the auxiliary battery pack to a second DC bus, a second bi-directional inverter connecting the second DC bus to the AC bus, thereby facilitating energy transfer between the two battery packs via the first DC bus, the AC bus and the second DC bus. A technical benefit may include the ability to control energy transfer between the two battery packs when the two battery packs are connected via both AC and DC buses.

Optionally in some examples, including in at least one preferred example, the bi-directional DC-DC circuit comprises a plurality of power converters to facilitate energy transfer between the two battery packs via one or more AC and/or DC buses.

Optionally in some examples, including in at least one preferred example, the battery energy storage system further comprises a bi-directional inverter configured to facilitate energy transfer between the main high voltage battery pack and an AC grid, and an on-site electrical load. The control unit is further configured to monitor AC grid data, wherein the AC grid data comprises a power demand indicator, and switch to a grid-assisted charge alternation mode in response to the power demand indicator dropping below a predetermined threshold, wherein the grid-assisted charge alternation mode involves alternating between energy transfer from the AC grid to the main high voltage battery, and energy transfer from the main high voltage battery to the on-site electrical load. A technical benefit may include ability to improve grid stability during low-demand periods, in addition to reduced battery degradation.

Optionally in some examples, including in at least one preferred example, the battery energy storage system further comprises a bi-directional inverter configured to facilitate energy transfer between the main high voltage battery pack and an AC grid, and an on-site electrical load. The control unit is further configured to switch to the grid-assisted charge alternation mode in response to the SoC dropping below a predetermined SoC threshold. A technical benefit may include enhancing system reliability by avoiding critically low SoC levels.

Optionally in some examples, including in at least one preferred example, the on-site electrical load comprises a heating, ventilating, and air conditioning (HVAC) system configured to maintain an optimal temperature range within the battery energy storage system. A technical benefit may include utilizing the discharge cycle to sustain an optimal temperature range within the battery energy storage system.

Optionally in some examples, including in at least one preferred example, the control unit is configured initiate a discharging cycle of the main high voltage battery pack in response to a power demand, e.g., from the AC grid. The control unit may also be configured to initiate a charging cycle of the main high voltage battery pack based on the AC grid conditions. A technical benefit may include improved grid stability by coordinating charging and discharging cycles according to AC grid conditions.

Optionally in some examples, including in at least one preferred example, the battery energy storage system further comprises a generator. The control unit is configured to switch to a generator-assisted charge alternation mode in response to SoC dropping below predetermined SoC threshold, wherein the generator-assisted alternation mode involves alternating between: energy transfer from the generator to the main high voltage battery, and energy transfer from the main high voltage battery to an on-site electrical load. A technical benefit may include reduced dependence on the auxiliary battery pack, as the generator, e.g., a fuel cell, a solar array, or an internal combustion engine generator, can support in energy transfer to the main high voltage battery pack.

According to a second aspect of the disclosure, a battery energy storage system is disclosed. The battery energy storage system comprises: a main high voltage battery pack, an auxiliary battery pack, and a bi-directional DC-DC circuit connecting the main high voltage battery pack and the auxiliary battery pack and configured to facilitate energy transfer between the two battery packs, and a control unit according to the first aspect of the disclosure. The second aspect of the disclosure may seek to enhance battery life by actively managing the charge levels of the main high voltage battery. A technical benefit may include reduced battery degradation by preventing prolonged periods of unchanged SoC.

Optionally in some examples, including in at least one preferred example, the battery energy storage system further comprises a bi-directional inverter configured to facilitate energy transfer between the main high voltage battery pack and an AC grid, an on-site electrical load. A technical benefit may include ability to improve grid stability during low-demand periods, in addition to reduced battery degradation.

Optionally in some examples, including in at least one preferred example, the battery energy storage system further comprises a generator. A technical benefit may include reduced dependence on the auxiliary battery pack, as the generator, e.g., a fuel cell, a solar array, or an internal combustion engine generator, can support in energy transfer to the main high voltage battery pack.

According to a third aspect of the disclosure, a method for managing a battery energy storage system is disclosed. The battery energy storage system comprises: a main high voltage battery pack, an auxiliary battery pack, and a bi-directional DC-DC circuit connecting the main high voltage battery pack and the auxiliary battery pack to facilitate energy transfer between the two battery packs. The method comprises monitoring S 1 an idle time of the main high voltage battery pack, wherein the idle time reflects a period during which the state of charge (SoC) remains unchanged. The method also comprises initiating S2 a charge alternation mode in response to the idle time of the main high voltage battery pack exceeding a predetermined duration, wherein the charge alternation mode involves alternating between: energy transfer from the main high voltage battery pack to the auxiliary battery pack, and energy transfer from the auxiliary battery pack to the main high voltage battery pack. The third aspect of the disclosure may seek to enhance battery life by actively managing the charge levels of the main high voltage battery. A technical benefit may include reduced battery degradation by preventing prolonged periods of unchanged SoC.

Optionally in some examples, including in at least one preferred example. The predetermined duration depends on the SoC. A technical benefit may include the ability to adjust the predetermined duration to be shorter for high SoC levels, where degradation is more severe, and to be longer for low SoC levels, where degradation is less severe.

Optionally in some examples, including in at least one preferred example, the bi-directional DC-DC circuit comprises a first bi-directional DC-DC converter connecting the main high voltage battery pack to a DC bus and a second bi-directional DC-DC converter connecting the auxiliary battery pack to the DC bus, thereby facilitating energy transfer between the two battery packs via the DC bus. A technical benefit may include the ability to control energy transfer between the two battery packs when the two battery packs are connected via a DC bus.

Optionally in some examples, including in at least one preferred example, the bi-directional DC-DC circuit comprises a first bi-directional inverter connecting the main high voltage battery pack to an AC bus and a second bi-directional inverter connecting the auxiliary battery pack to the AC bus, thereby facilitating energy transfer between the two battery packs via the AC bus. A technical benefit may include the ability to control energy transfer between the two battery packs when the two battery packs are connected via an AC bus.

Optionally in some examples, including in at least one preferred example, the bi-directional DC-DC circuit comprises: a first bi-directional DC-DC converter connecting the main high voltage battery pack to a first DC bus, a first bi-directional inverter connecting the first DC bus to an AC bus, and a second bi-directional DC-DC converter connecting the auxiliary battery pack to a second DC bus, a second bi-directional inverter connecting the second DC bus to the AC bus, thereby facilitating energy transfer between the two battery packs via the first DC bus, the AC bus and the second DC bus. A technical benefit may include the ability to control energy transfer between the two battery packs when the two battery packs are connected via both AC and DC buses.

Optionally in some examples, including in at least one preferred example, the bi-directional DC-DC circuit comprises a plurality of power converters to facilitate energy transfer between the two battery packs via one or more AC and/or DC buses. A technical benefit may include the ability to control energy transfer between the two battery packs when the two battery packs are connected via one or more AC and/or DC buses.

Optionally in some examples, including in at least one preferred example, the battery energy storage system further comprises a bi-directional inverter configured to facilitate energy transfer between the main high voltage battery pack and an AC grid, and an on-site electrical load. The method further comprises monitoring AC grid conditions, wherein the AC grid conditions comprises a power demand indicator, and switching to a grid-assisted charge alternation mode in response to the power demand indicator being below a predetermined threshold, wherein the grid-assisted charge alternation mode alternating between: energy transfer from the AC grid to the main high voltage battery, and energy transfer from the main high voltage battery to the on-site electrical load. A technical benefit may include ability to improve grid stability during low-demand periods, in addition to reduced battery degradation.

Optionally in some examples, including in at least one preferred example, the battery energy storage system further comprises a bi-directional inverter configured to facilitate energy transfer between the main high voltage battery pack and an AC grid, and an on-site electrical load. The method further comprises switching S4-B to the grid-assisted charge alternation mode in response to the SoC dropping below a predetermined SoC threshold. A technical benefit may include enhancing system reliability by avoiding critically low SoC levels.

Optionally in some examples, including in at least one preferred example, the method further comprises initiating a discharging cycle of the main high voltage battery pack in response to a power demand, e.g., from the AC grid. The method may also comprise initiating a charging cycle of the main high voltage battery pack based on the AC grid conditions. A technical benefit may include improved grid stability by coordinating charging and discharging cycles according to AC grid conditions.

Optionally in some examples, including in at least one preferred example, the battery energy storage system further comprises a generator, and the method further comprises switching to a generator-assisted charge alternation mode in response to SoC dropping below predetermined SoC threshold, wherein the generator-assisted alternation mode involves alternating between energy transfer from the generator to the main high voltage battery, and energy transfer from the main high voltage battery to an on-site electrical load. A technical benefit may include reduced dependence on the auxiliary battery pack, as the generator, e.g., a fuel cell, a solar array, or an internal combustion engine generator, can support in energy transfer to the main high voltage battery pack.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 illustrates an example of a battery energy storage system comprising: a main high voltage battery pack, an auxiliary battery pack, a bi-directional DC-DC circuit, and a control unit, according to an example.
FIG. 2 illustrates the battery energy storage system of FIG. 1 further comprising a bi-directional inverter configured to facilitate energy transfer between the main high voltage battery pack and an AC grid, according to an example.
FIG. 3A illustrates the battery energy storage system of FIG. 1 having a bi-directional DC-DC circuit comprising two bi-directional DC-DC converters connected via a DC bus, according to an example.
FIG. 3B illustrates the battery energy storage system of FIG. 1 having a bi-directional DC-DC circuit comprising two bi-directional inverters connected via an AC bus, according to an example.
FIG. 3C illustrates the battery energy storage system of FIG. 1 having a bi-directional DC-DC circuit comprising two bi-directional DC-DC converters connecting the main and auxiliary battery to two DC buses, and two bi-directional inverters connecting the two DC buses to a common AC bus, according to an example.
FIG. 4 is a flowchart of a method for managing a battery energy storage system.
FIG. 5A schematically illustrates a control unit.
FIG. 5B shows an example of a computer program product.
FIG. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

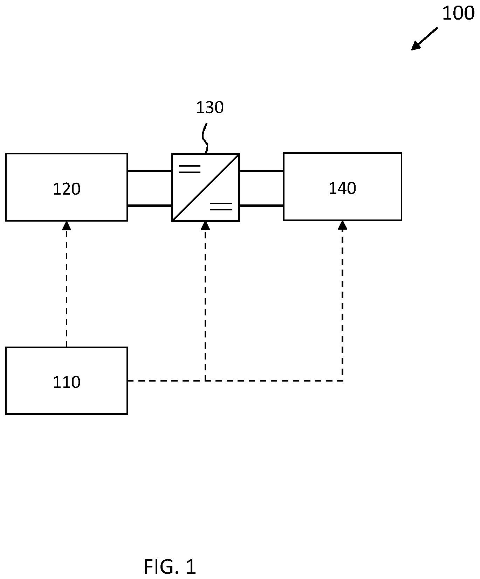

FIGS. 1-3 illustrate a first aspect of the disclosure relating to a control unit 110 for managing a battery energy storage system 100, 200.

FIG. 1 illustrates a control unit 110 for managing a battery energy storage system 100, 200 comprising: a main high voltage battery pack 120, an auxiliary battery pack 140, and a bi-directional DC-DC circuit 130 connecting the main high voltage battery pack 120 and the auxiliary battery pack 140 to facilitate energy transfer between the two battery packs. The main high voltage battery 120 is typically a lithium-ion battery pack, with an output voltage between 300 and 800 volts, although the output voltage may also be outside this range depending on the specific design and requirements of the battery energy storage system 100, 200. The main high voltage battery 120 is configured to store and provide electrical energy whenever needed. The auxiliary battery pack 140 may be either a low voltage battery or high voltage battery. The bi-directional DC-DC circuit 130 converts the output voltages of the main high voltage battery 120 and the auxiliary battery pack 140, thereby regulating the direction of energy transfer. This allows the bi-directional DC-DC circuit 130 to precisely control the charging and discharging currents of the main high voltage battery 120, ensuring efficient energy management and optimal system performance. Note that if the main high voltage battery pack 120 and the auxiliary battery pack 140 are connected directly, without an AC or DC bus, the bi-directional DC-DC circuit 130 can be any type of bi-directional converter. However, if the batteries are connected via a bus, multiple power converters may be required, as discussed in subsequent paragraphs.

The control unit 110 is configured to monitor an idle time of the main high voltage battery pack 120, wherein the idle time reflects a period during which the state of charge (SoC) remains unchanged. The SoC is typically obtained from a battery management system (BMS) of the main high voltage battery pack 120. Similarly, idle time may also be obtained from the BMS or calculated by the control unit 110 by monitoring the duration during which the SoC remains in a state of neither charging nor discharging.

In response to the idle time of the main high voltage battery pack 120 exceeding a predetermined duration, the control unit 110 is configured to initiate a charge alternation mode, wherein the charge alternation mode involves alternating between energy transfer from the main high voltage battery pack 120 to the auxiliary battery pack 140, and energy transfer from the auxiliary battery pack 140 to the main high voltage battery pack 120. The predetermined duration can vary significantly depending on the requirements of the battery energy storage system 100, 200 and the frequency of charging and discharging cycles. For instance, the duration an energy storage system remains in idle mode is typically described by a storage ratio, which is defined as the sum of all idle time intervals during a specified time interval, e.g., 24 hours. For example, if the system remains idle for 12 hours a day, the storage ratio would be 50 percent. In some examples there may also be requirements to maintain a storage ratio of at least 50% per day. Ideally, the storage ratio should be minimized, particularly at high SoC levels, to reduce degradation. However, factors such as electricity pricing and load demand typically influence the timing of charging and discharging, which in turn affect the storage ratio. Hence, storage ratio requirements and the frequency of charging and discharging cycles typically determine the predetermined duration, which can range from minutes to hours.

The predetermined duration may be fixed, or may vary depending on the SoC. An advantage of varying the predetermined duration based on the SoC is the ability to shorten the duration at higher SoC levels, where battery degradation occurs more rapidly, and extend it at lower SoC levels, where degradation is less severe.

In some examples, the battery energy storage system 100, 200 further comprises a bi-directional inverter 250 configured to facilitate energy transfer between the main high voltage battery pack and an AC grid 260. The bi-directional inverter 250 converts the DC output voltage of the main high voltage battery 120 and the AC voltage of the AC grid 260, allowing precise regulation of energy flow in both directions.

The battery energy storage system 100, 200 may also comprise one or more electrical loads 170 that may be connected either to AC or DC bus. The one or more electrical load may be utilized during energy transfer from the main high voltage battery 120 in a grid-assisted charge alternation mode. In one example, the one ore more on-site electrical loads 270 comprise a heating, ventilating, and air conditioning (HVAC) system configured to maintain an optimal temperature range within the battery energy storage system.

The control unit 110 is further configured to monitor AC grid conditions, wherein the AC grid conditions comprises a power demand indicator, and switch to a grid-assisted charge alternation mode in response to the power demand indicator dropping below a predetermined threshold. The power demand indicator may be any metric that reflects the real-time balance between electricity generation and demand. The predetermined threshold is set to ensure that grid-assisted charge alternation mode is only activated when AC grid power demand is sufficiently low, thereby maintaining grid stability. The grid-assisted charge alternation mode involves alternating between energy transfer from the AC grid 260 to the main high voltage battery 120, and energy transfer from the main high voltage battery 120 to the on-site electrical load 270. An advantage of switching to a grid-assisted charge alternation mode at times is that it can be operationally beneficial during periods of low demand, when excess energy from the AC grid needs to be absorbed into battery energy storage systems or other storage solutions. Thus, this approach not only reduces battery degradation, but also helps maintain grid stability.

In some examples, the battery energy storage system 100, 200, the control unit 110 may also be configured to switch to the grid-assisted charge alternation mode in response to the SoC dropping below a predetermined SoC threshold. This ensures that the SoC does not fall to critically low levels, enhancing system reliability. For instance, the predetermined SoC threshold may be set at 20 percent in one example to ensure system reliability. However, this threshold can vary considerably depending on the specific storage requirements and the capacity of the battery energy storage system 100, 200. Additionally, in some examples, the charge alternation mode may be halted once an optimal storage SoC level is reached, typically around 30-40 percent.

In some examples, the control unit 110 may be configured to initiate a discharging cycle of the main high voltage battery pack 120 in response to a power demand, such as from the AC grid. The control unit 110 may also initiate a charging cycle of the main high voltage battery pack 120 based on AC grid conditions. An advantage of this approach is improved grid stability by coordinating charging and discharging cycles according to AC grid conditions.

In some examples, the battery energy storage system 100, 200 further comprises a generator. The control unit may be configured to switch to a generator-assisted charge alternation mode in response to SoC dropping below predetermined SoC threshold. The generator-assisted alternation mode involves alternating between: energy transfer from the generator to the main high voltage battery 120, and energy transfer from the main high voltage battery 120 to an on-site electrical load 270. The generator may be a fuel cell, solar array, internal combustion engine generator, or any other type of power generating source. An advantage of this approach is the reduced dependence on the auxiliary battery pack, as the generator can assist in transferring energy to the main high voltage battery pack, providing additional support when needed.

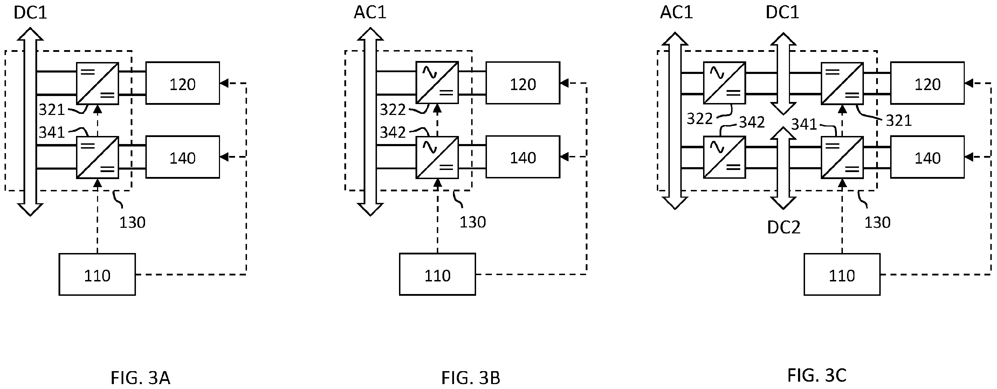

FIGS. 3A-3C relate to implementations of the bidirectional DC-DC circuit 130 that may be of special interest when the main high voltage battery pack 120 and the auxiliary battery pack 140 are connected via a bus. Typically, a DC or AC bus maintains a fixed voltage, requiring multiple power converters when connecting two battery packs via the bus. Hence, in the general case of energy transfer over a bus, the bi-directional DC-DC circuit 130 comprises a plurality of power converters to facilitate energy transfer between the two battery packs 120, 140.

FIG. 3A illustrates the battery energy storage system of FIG. 1 wherein the two battery packs 120, 140 are connected via a DC bus. The bi-directional DC-DC circuit 130 comprises a first bi-directional DC-DC converter 321 connecting the main high voltage battery pack 120 to a DC bus DC1 and a second bi-directional DC-DC converter 341 connecting the auxiliary battery pack 140 to the DC bus DC1, thereby facilitating energy transfer between the two battery packs 120, 140 via the DC bus DC1. This implementation is particularly useful in multi-battery systems where multiple battery packs are connected via a DC bus. In such cases, one of the battery packs can be designated as the auxiliary battery 140, and this designation can be dynamically reassigned to other battery packs as needed. Thus, any of the battery packs may assume the role of the auxiliary battery pack 140 at any time, enabling a more flexible and adaptive management of the battery energy storage system.

FIG. 3B illustrates the battery energy storage system of FIG. 1 wherein the two battery packs 120, 140 are connected via an AC bus, according to an example. The bi-directional DC-DC circuit 130 comprises a first bi-directional inverter 322 connecting the main high voltage battery pack 120 to an AC bus AC1 and a second bi-directional inverter 342 connecting the auxiliary battery pack 140 to the AC bus AC1, thereby facilitating energy transfer between the two battery packs 120, 140 via the AC bus AC1. This implementation is particularly useful in multi-battery systems where multiple battery packs are connected via an AC bus. In such cases, one of the battery packs can be designated as the auxiliary battery 140, and this designation can be dynamically reassigned to other battery packs as needed. Thus, any of the battery packs may assume the role of the auxiliary battery pack 140 at any time, enabling a more flexible and adaptive management of the battery energy storage system.

FIG. 3C illustrates the battery energy storage system of FIG. 1 wherein the two battery packs 120, 140 are connected via two DC buses and a common AC bus. The bi-directional DC-DC circuit 130 comprises: a first bi-directional DC-DC converter 321 connecting the main high voltage battery pack 120 to a first DC bus DC1, a first bi-directional inverter connecting the first DC bus DC1 to an AC bus AC1, and a second bi-directional DC-DC converter 341 connecting the auxiliary battery pack 140 to a second DC bus DC2, a second bi-directional inverter connecting the second DC bus DC2 to an AC bus AC1, thereby facilitating energy transfer between the two battery packs 120, 140 via a first DC bus DC1, an AC bus AC1 and a second DC bus DC2. Likewise, this implementation is particularly useful in multi-battery systems where multiple battery packs are connected via a common AC bus.

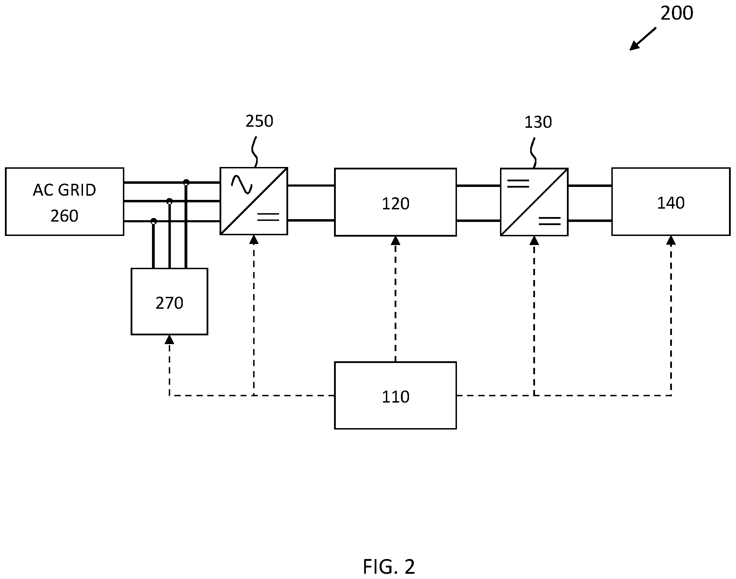

FIGS. 1-3 also illustrate a second aspect of the disclosure relating to a battery energy storage system 100, 200. FIG. 1 illustrates a battery energy storage system 100, 200. The battery energy storage system 100, 200 comprises: a main high voltage battery pack 120, an auxiliary battery pack 140, and a bi-directional DC-DC circuit connecting the main high voltage battery pack 120 and the auxiliary battery pack 140 and configured to facilitate energy transfer between the two battery packs, and a control unit according to the first aspect of the disclosure. FIG. 2 illustrates a battery energy storage system 100, 200 further comprising a bi-directional inverter 250 configured to facilitate energy transfer between the main high voltage battery pack and an AC grid 260. In some examples the battery energy storage system 100, 200 may further comprise a generator, such as a fuel cell, a solar array, or an internal combustion engine generator. It should be noted that any of the aforementioned aspects relating to the control unit 110 are also applicable to the battery energy storage system 100, 200

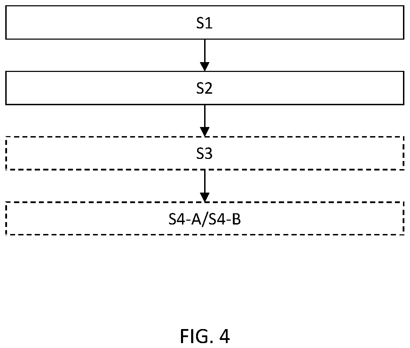

FIG. 4 illustrates a third aspect of the disclosure relating to a method for managing a battery energy storage system 100, 200. The method comprises monitoring S1 an idle time, and initiating S2 a charge alternation mode. Any of the aforementioned aspects relating to the control unit 110, and the battery energy storage system 100, 200 are also applicable to the method.

The method comprises monitoring S1 an idle time and a state of charge (SoC) of the main high voltage battery pack 120, wherein the idle time reflects a period during which the SoC remains unchanged. SoC is typically obtained directly from the BMS of the main high voltage battery pack 120. Likewise, idle time may be obtained directly from the BMS or indirectly by determining the duration during which the SoC remains in a state of neither charging nor discharging.

The method also comprises initiating S2 a charge alternation mode in response to the idle time of the main high voltage battery pack 120 exceeding a predetermined duration, wherein the charge alternation mode involves alternating between: energy transfer from the main high voltage battery pack 120 to the auxiliary battery pack 140, and energy transfer from the auxiliary battery pack 140 to the main high voltage battery pack 120. As mentioned earlier, the predetermined duration can vary significantly depending on the requirements of the battery energy storage system 100, 200 and the frequency of charging and discharging cycles. In some examples, the predetermined duration may be fixed, or may vary depending on the SoC. An advantage of varying the predetermined duration based on the SoC is the ability to shorten the duration at higher SoC levels, where battery degradation occurs more rapidly, and extend it at lower SoC levels, where degradation is less severe.

In some examples, the main high voltage battery pack 120 and the auxiliary battery pack 140 are connected via a DC bus or an AC bus. Typically, a DC or AC bus maintains a fixed voltage, requiring multiple power converters when connecting two battery packs via the bus. Hence, in the general case of energy transfer over a bus, the bi-directional DC-DC circuit 130 comprises a plurality of power converters to facilitate energy transfer between the two battery packs 120, 140. It should be noted that any of the aforementioned aspects relating the implementation of the bi-directional DC-DC circuit 130 are also applicable to the third aspect of the disclosure.

In some examples, the battery energy storage system 100, 200 further comprises a bi-directional inverter 250 configured to facilitate energy transfer between the main high voltage battery pack and an AC grid 260, and an on-site electrical load 270. The method further comprises monitoring S3 AC grid conditions, wherein the AC grid conditions comprises a power demand indicator, and switching S4-A to a grid-assisted charge alternation mode in response to the power demand indicator being below a predetermined threshold, wherein the grid-assisted charge alternation mode alternating between: energy transfer from the AC grid 260 to the main high voltage battery 120, and energy transfer from the main high voltage battery 120 to the on-site electrical load 270. An advantage of switching to a grid-assisted charge alternation mode at times is that it can be operationally beneficial during periods of low demand, when excess energy from the AC grid needs to be absorbed into battery energy storage systems or other energy storage solutions. Thus, this approach not only reduces battery degradation, but also helps maintain grid stability.

In some examples, the battery energy storage system 100, 200 further comprises a bi-directional inverter 250 configured to facilitate energy transfer between the main high voltage battery pack and an AC grid 260, and an on-site electrical load 270. The method further comprises switching S4-B to the grid-assisted charge alternation mode in response to the SoC dropping below a predetermined SoC threshold. This ensures that the SoC does not fall to critically low levels, enhancing system reliability. For instance, the predetermined SoC threshold may be set at 20 percent in one example to ensure system reliability. However, this threshold can vary considerably depending on the specific storage requirements and the capacity of the battery energy storage system 100, 200. Additionally, in some examples, the charge alternation mode may be halted once an optimal storage SoC level is reached, typically around 30-40 percent.

In some examples, including in at least one preferred example, the method further comprises initiating a discharging cycle of the main high voltage battery pack 120 in response to a power demand, e.g., from the AC grid. The method may also comprise initiating a charging cycle of the main high voltage battery pack 120 based on the AC grid conditions. An advantage of this approach is improved grid stability by coordinating charging and discharging cycles according to AC grid conditions.

In some examples, the battery energy storage system 100, 200 further comprises a generator, and the method further comprises switching to a generator-assisted charge alternation mode in response to SoC dropping below predetermined SoC threshold, wherein the generator-assisted alternation mode involves alternating between energy transfer from the generator to the main high voltage battery 120, and energy transfer from the main high voltage battery 120 to an on-site electrical load 270. The generator may be a fuel cell, solar array, internal combustion engine generator, or any other type of power generating source. An advantage of this approach is the reduced dependence on the auxiliary battery pack, as the generator can assist in transferring energy to the main high voltage battery pack, providing additional support when needed.

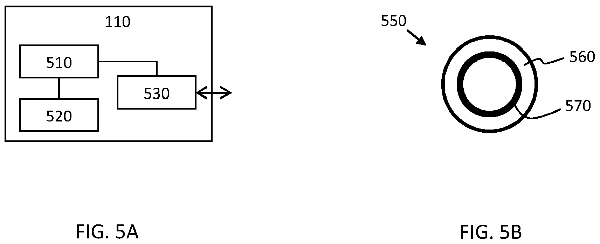

FIG. 5A schematically illustrates, in terms of a number of functional units, the components of a control unit 110 according to aspects of the discussions and methods disclosed herein. This control unit 110 may typically be comprised in the battery energy storage system 100, 200. Processing circuitry 510 is provided using any combination of one or more of a suitable central processing unit CPU, multiprocessor, microcontroller, digital signal processor DSP, etc., capable of executing software instructions stored in a computer program product, e.g., in the form of a storage medium 520. The processing circuitry 510 may further be provided as at least one application specific integrated circuit ASIC, or field programmable gate array FPGA.

Particularly, the processing circuitry 510 is configured to cause the control unit 110 to perform a set of operations, or steps, such as the methods discussed in connection to FIG. 3. For example, the storage medium 520 may store the set of operations, and the processing circuitry 510 may be configured to retrieve the set of operations from the storage medium 520 to cause the control unit 110 to perform the set of operations. The set of operations may be provided as a set of executable instructions. Thus, the processing circuitry 510 is thereby arranged to execute methods as herein disclosed.

The storage medium 520 may also comprise persistent storage, which, for example, can be any single one or combination of magnetic memory, optical memory, solid state memory or even remotely mounted memory.

The control unit 110 may further comprise an interface 530 for communications with at least one external system, such as the main high voltage battery pack 120, the auxiliary battery pack 140, the bi-directional DC-DC circuit 130, a bi-directional inverter 250, an AC grid 260, etc. As such the interface 530 may comprise one or more transmitters and receivers, comprising analogue and digital components and a suitable number of ports for wireline or wireless communication.

The processing circuitry 510 controls the general operation of the control unit 110, e.g., by sending data and control signals to the interface 530 and the storage medium 520, by receiving data and reports from the interface 530, and by retrieving data and instructions from the storage medium 520. Other components, as well as the related functionality, of the control node are omitted in order not to obscure the concepts presented herein.

FIG. 4B shows an example of a computer program product. A computer readable medium 560 carrying a computer program 570 comprising program code means for performing the steps of aforementioned method when said program product is run on a computer or on processing circuitry 510 of a control unit 110.

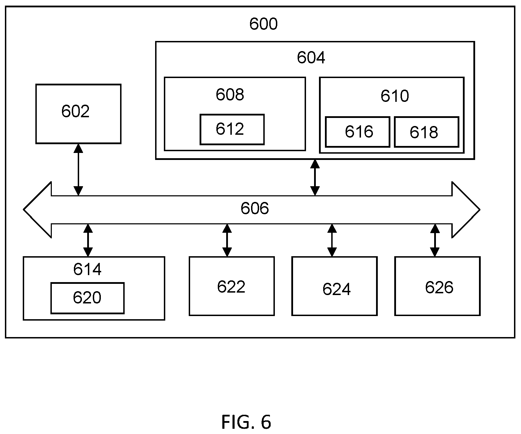

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 500 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A control unit 110 for managing a battery energy storage system 100, wherein the battery energy storage system 100, 200 comprises: a main high voltage battery pack 120, an auxiliary battery pack 140, and a bi-directional DC-DC circuit connecting the main high voltage battery pack 120 and the auxiliary battery pack 140 to facilitate energy transfer between the two battery packs; and wherein the control unit 110 is configured to: monitor idle time and state of charge, SoC, of the main high voltage battery pack 120, wherein the idle time reflects a period during which the SoC remains unchanged; and initiate a charge alternation mode in response to the idle time of the main high voltage battery pack 120 exceeding a predetermined duration, wherein the charge alternation mode involves alternating between: energy transfer from the main high voltage battery pack 120 to the auxiliary battery pack 140, and energy transfer from the auxiliary battery pack 140 to the main high voltage battery pack 120.

Example 2: The control unit 110 of example 1, wherein the predetermined duration depends on the SoC of the main high voltage battery pack 120.

Example 3: The control unit 110 of any of examples 1-2, wherein the bi-directional DC-DC circuit 130 comprises a first bi-directional DC-DC converter 321 connecting the main high voltage battery pack 120 to a DC bus DC1 and a second bi-directional DC-DC converter 341 connecting the auxiliary battery pack 140 to the DC bus DC1, thereby facilitating energy transfer between the two battery packs 120, 140 via the DC bus DC1.

Example 4: The control unit 110 of any of examples 1-2, wherein the bi-directional DC-DC circuit 130 comprises a first bi-directional inverter 322 connecting the main high voltage battery pack 120 to an AC bus AC1 and a second bi-directional inverter 342 connecting the auxiliary battery pack 140 to the AC bus AC1, thereby facilitating energy transfer between the two battery packs 120, 140 via the AC bus AC1.

Example 5: The control unit 110 of any of examples 1-2, wherein the bi-directional DC-DC circuit 130 comprises: a first bi-directional DC-DC converter 321 connecting the main high voltage battery pack 120 to a first DC bus DC1, a first bi-directional inverter 322 connecting the first DC bus DC1 to an AC bus AC1, and a second bi-directional DC-DC converter 341 connecting the auxiliary battery pack 140 to a second DC bus DC2, a second bi-directional inverter 342 connecting the second DC bus DC2 to an AC bus AC1, thereby facilitating energy transfer between the two battery packs 120, 140 via a first DC bus DC1, an AC bus AC1 and a second DC bus DC2.

Example 6: The control unit 110 of any of examples 1-5, wherein the battery energy storage system 100, 200 further comprises a bi-directional inverter 250 configured to facilitate energy transfer between the main high voltage battery pack and an AC grid 260, and an on-site electrical load 270, wherein the control unit 110 is further configured to: monitor AC grid conditions, wherein the AC grid conditions comprises a power demand indicator, switch to a grid-assisted charge alternation mode in response to the power demand indicator being below a predetermined threshold, wherein the grid-assisted charge alternation mode involves alternating between: energy transfer from the AC grid 260 to the main high voltage battery 120, and energy transfer from the main high voltage battery 120 to the on-site electrical load 270.

Example 7: The control unit 110 of any of examples 1-6, wherein the battery energy storage system 100, 200 further comprises a bi-directional inverter 250 configured to facilitate energy transfer between the main high voltage battery pack and an AC grid 260, and an on-site electrical load 270, wherein the control unit 110 is further configured to: switch to the grid-assisted charge alternation mode in response to the SoC dropping below a predetermined SoC threshold.

Example 8: The control unit 110 of any of examples 6-7, wherein the on-site electrical load 270 comprises a heating, ventilating, and air conditioning, HVAC, system configured to maintain an optimal temperature range within the battery energy storage system 100, 200.

Example 9: The control unit 110 of any of examples 1-8, wherein the battery energy storage system 100, 200 further comprises a generator, and wherein the control unit 110 is further configured to: switch to a generator-assisted charge alternation mode in response to SoC dropping below predetermined SoC threshold, wherein the generator-assisted alternation mode involves alternating between: energy transfer from the generator to the main high voltage battery 120, and energy transfer from the main high voltage battery 120 to an on-site electrical load 270.

Example 10: A battery energy storage system 100, 200, wherein the battery energy storage system 100, 200 comprises: a main high voltage battery pack 120, an auxiliary battery pack 140, a bi-directional DC-DC circuit connecting the main high voltage battery pack 120 and the auxiliary battery pack 140 and configured to facilitate energy transfer between the two battery packs, and a control unit according to example 1.

Example 11: The battery energy storage system 100, 200 of example 10, wherein the battery energy storage system 100, 200 further comprises a bi-directional inverter 250 configured to facilitate energy transfer between the main high voltage battery pack and an AC grid 260, an on-site electrical load 270, and a control unit according to any of examples 1-8.

Example 12: The battery energy storage system 100, 200 of any of examples 10-11, wherein the battery energy storage system 100, 200 further comprises a generator, and a control unit according to any of examples 1-9.

Example 13: A method for managing a battery energy storage system 100, 200, wherein the battery energy storage system 100, 200 comprises: a main high voltage battery pack 120, an auxiliary battery pack 140, and a bi-directional DC-DC circuit 130 connecting the main high voltage battery pack 120 and the auxiliary battery pack 140 to facilitate energy transfer between the two battery packs; and wherein the method comprises: monitoring S1 an idle time of the main high voltage battery pack 120, wherein the idle time reflects a period during which the state of charge, SoC, remains unchanged; and initiating S2 a charge alternation mode in response to the idle time of the main high voltage battery pack 120 exceeding a predetermined duration, wherein the charge alternation mode involves alternating between: energy transfer from the main high voltage battery pack 120 to the auxiliary battery pack 140, and energy transfer from the auxiliary battery pack 140 to the main high voltage battery pack 120.

Example 14: The method of example 13, wherein the predetermined duration depends on the SoC of the main high voltage battery pack 120.

Example 15: The method of any of examples 13-14, wherein the bi-directional DC-DC circuit 130 comprises a plurality of power converters 321, 322, 341, 342 to facilitate energy transfer between the two battery packs 120, 140 via one or more AC and/or DC buses AC1, DC1, DC2.

Example 16: The method of any of examples 13-15, wherein the battery energy storage system 100, 200 further comprises a bi-directional inverter 250 configured to facilitate energy transfer between the main high voltage battery pack and an AC grid 260, and an on-site electrical load 270, wherein the method further comprises: monitoring AC grid conditions, wherein the AC grid conditions comprises a power demand indicator, switching S4-A to a grid-assisted charge alternation mode in response to the power demand indicator being below a predetermined threshold, wherein the grid-assisted charge alternation mode alternating between: energy transfer from the AC grid 260 to the main high voltage battery 120, and energy transfer from the main high voltage battery 120 to the on-site electrical load 270.

Example 17: The method of any of examples 13-16, wherein the battery energy storage system 100, 200 further comprises a bi-directional inverter 250 configured to facilitate energy transfer between the main high voltage battery pack and an AC grid 260, and an on-site electrical load 270, wherein the method further comprises: switching S4-B to the grid-assisted charge alternation mode in response to the SoC dropping below a predetermined SoC threshold.

Example 18: The method of any of examples 13-17, wherein the battery energy storage system 100, 200 further comprises a generator, and wherein the method further comprises: switching to a generator-assisted charge alternation mode in response to SoC dropping below predetermined SoC threshold, wherein the generator-assisted alternation mode involves alternating between: energy transfer from the generator to the main high voltage battery 120, and energy transfer from the main high voltage battery 120 to an on-site electrical load 270.

Example 19: A computer program product comprising program code for performing, when executed by the processing circuitry, the method of any of examples 13-18.

Example 20: A non-transitory computer-readable storage medium comprising instructions, which when executed by the processing circuitry, cause the processing circuitry to perform the method of any of examples 13-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A control unit (110) for managing idle time in a battery energy storage system (100, 200), wherein the battery energy storage system (100, 200) comprises a main high voltage battery pack (120), an auxiliary battery pack (140), and a bi-directional DC-DC circuit (130) connecting the main high voltage battery pack (120) and the auxiliary battery pack (140) to facilitate energy transfer between the two battery packs (120, 140), and wherein the control unit (110) is configured to:
monitor idle time and state of charge, SoC, of the main high voltage battery pack (120), wherein the idle time reflects a period during which the SoC remains unchanged; and
initiate a charge alternation mode in response to the idle time of the main high voltage battery pack (120) exceeding a predetermined duration, wherein the charge alternation mode involves alternating between energy transfer from the main high voltage battery pack (120) to the auxiliary battery pack (140), and energy transfer from the auxiliary battery pack (140) to the main high voltage battery pack (120).

2. The control unit (110) of claim 1, wherein the predetermined duration depends on the SoC of the main high voltage battery pack (120).

3. The control unit (110) of any of claims 1-2, wherein the bi-directional DC-DC circuit (130) comprises a first bi-directional DC-DC converter (321) connecting the main high voltage battery pack (120) to a DC bus (DC1) and a second bi-directional DC-DC converter (341) connecting the auxiliary battery pack (140) to the DC bus (DC1), thereby facilitating energy transfer between the two battery packs (120, 140) via the DC bus (DC1).

4. The control unit (110) of any of claims 1-2, wherein the bi-directional DC-DC circuit (130) comprises a first bi-directional inverter (322) connecting the main high voltage battery pack (120) to an AC bus (AC1) and a second bi-directional inverter (342) connecting the auxiliary battery pack (140) to the AC bus (AC1), thereby facilitating energy transfer between the two battery packs (120, 140) via the AC bus (AC1).

5. The control unit (110) of any of claims 1-2, wherein the bi-directional DC-DC circuit (130) comprises: a first bi-directional DC-DC converter (321) connecting the main high voltage battery pack (120) to a first DC bus (DC1), a first bi-directional inverter (322) connecting the first DC bus (DC1) to an AC bus (AC1), and a second bi-directional DC-DC converter (341) connecting the auxiliary battery pack (140) to a second DC bus (DC2), a second bi-directional inverter (342) connecting the second DC bus (DC2) to an AC bus (AC1), thereby facilitating energy transfer between the two battery packs (120, 140) via a first DC bus (DC1), an AC bus (AC1) and a second DC bus (DC2).

6. The control unit (110) of any of claims 1-5, wherein the battery energy storage system (100, 200) further comprises a bi-directional inverter (250) configured to facilitate energy transfer between the main high voltage battery pack and an AC grid (260), and an on-site electrical load (270), wherein the control unit (110) is further configured to:
monitor AC grid conditions, wherein the AC grid conditions comprises a power demand indicator,
switch to a grid-assisted charge alternation mode in response to the power demand indicator being below a predetermined threshold, wherein the grid-assisted charge alternation mode involves alternating between energy transfer from the AC grid (260) to the main high voltage battery (120), and energy transfer from the main high voltage battery (120) to the on-site electrical load (270).

7. The control unit (110) of any of claims 1-6, wherein the battery energy storage system (100, 200) further comprises a bi-directional inverter (250) configured to facilitate energy transfer between the main high voltage battery pack and an AC grid (260), and an on-site electrical load (270), wherein the control unit (110) is further configured to:
switch to the grid-assisted charge alternation mode in response to the SoC dropping below a predetermined SoC threshold.

8. A battery energy storage system (100, 200), wherein the battery energy storage system (100, 200) comprises a main high voltage battery pack (120), an auxiliary battery pack (140), a bi-directional DC-DC circuit connecting the main high voltage battery pack (120) and the auxiliary battery pack (140) and configured to facilitate energy transfer between the two battery packs, and a control unit according to any of claims 1-5.

9. The battery energy storage system (100, 200) of claim 8, wherein the battery energy storage system (100, 200) further comprises a bi-directional inverter (250) configured to facilitate energy transfer between the main high voltage battery pack and an AC grid (260), an on-site electrical load (270), and a control unit according to any of claims 6-7.

10. A method for managing idle time in a battery energy storage system (100, 200), wherein the battery energy storage system (100, 200) comprises a main high voltage battery pack (120), an auxiliary battery pack (140), and a bi-directional DC-DC circuit (130) connecting the main high voltage battery pack (120) and the auxiliary battery pack (140) to facilitate energy transfer between the two battery packs (120, 140), and wherein the method comprises:
monitoring (S1) an idle time of the main high voltage battery pack (120), wherein the idle time reflects a period during which the state of charge, SoC, remains unchanged; and
initiating (S2) a charge alternation mode in response to the idle time of the main high voltage battery pack (120) exceeding a predetermined duration, wherein the charge alternation mode involves alternating between energy transfer from the main high voltage battery pack (120) to the auxiliary battery pack (140), and energy transfer from the auxiliary battery pack (140) to the main high voltage battery pack (120).

11. The method of claim 10, wherein the predetermined duration depends on the SoC of the main high voltage battery pack (120).

12. The method of any of claims 10-11, wherein the bi-directional DC-DC circuit (130) comprises a plurality of power converters (321, 322, 341, 342) to facilitate energy transfer between the two battery packs (120, 140) via one or more AC and/or DC buses (AC1, DC1, DC2).

13. The method of any of claims 10-12, wherein the battery energy storage system (100, 200) further comprises a bi-directional inverter (250) configured to facilitate energy transfer between the main high voltage battery pack and an AC grid (260), and an on-site electrical load (270), wherein the method further comprises:
monitoring (S3) AC grid conditions, wherein the AC grid conditions comprises a power demand indicator,
switching (S4-A) to a grid-assisted charge alternation mode in response to the power demand indicator being below a predetermined threshold, wherein the grid-assisted charge alternation mode alternating between energy transfer from the AC grid (260) to the main high voltage battery (120), and energy transfer from the main high voltage battery (120) to the on-site electrical load (270).

14. The method of any of claims 10-13, wherein the battery energy storage system (100, 200) further comprises a bi-directional inverter (250) configured to facilitate energy transfer between the main high voltage battery pack and an AC grid (260), and an on-site electrical load (270), wherein the method further comprises:
switching (S4-B) to the grid-assisted charge alternation mode in response to the SoC dropping below a predetermined SoC threshold.

15. A non-transitory computer-readable storage medium comprising instructions, which when executed by the processing circuitry, cause the processing circuitry to perform the method of any of claims 10-14.
